# EUROPÄISCHE PATENTSCHRIFT

(11) **EP 3 939 338 B1**
(45) Veröffentlichungstag und Bekanntmachung des Hinweises auf die Patenterteilung: **21.02.2024**
(21) Anmeldenummer: 20724503.6
(22) Anmeldetag: 07.05.2020
(51) Int. Cl.: H04R 25/00

(54) **VERFAHREN ZUR ANPASSUNG EINER OTOPLASTIK EINES HÖRGERÄTS**
METHOD FOR ADAPTING AN OTOPLASTIC OF A HEARING AID
PROCÉDÉ PERMETTANT D'ADAPTER UN ÉLÉMENT OTOPLASTIQUE D'UN APPAREIL AUDITIF

(30) Priorität: 09.05.2019 DE 102019206744
(43) Veröffentlichungstag der Anmeldung: 19.01.2022
(73) Patentinhaber: Sivantos Pte. Ltd., Singapore 539775 (SG)
(72) Erfinder: WIETZKE, Philipp, 91315 Höchstadt an der Aisch (DE)
(74) Vertreter: FDST Patentanwälte
(86) Internationale Anmeldenummer: PCT/EP2020/062718
(87) Internationale Veröffentlichungsnummer: WO 2020/225365

(56) Entgegenhaltungen:
- EP-A1- 0 629 101
- EP-A1- 3 113 520
- DE-A1- 19 834 849
- US-A1- 2016 317 352
- US-A1- 2017 311 069
- US-B1- 6 473 512
- US-B2- 10 034 105

## Beschreibung

Die Erfindung betrifft ein Verfahren zur Anpassung einer Otoplastik eines Hörgeräts, insbesondere ein In-dem-Ohr-Hörgerät.

Hörgeräte weisen üblicherweise einen Lautsprecher, auch als "receiver" bezeichnet auf, mittels dessen akustische Signale, d. h. Schall dem Gehör eines Nutzers (auch: Träger) des Hörgeräts dargeboten werden. Insbesondere in Form von Hörhilfegeräten dienen Hörgeräte zur Versorgung von Personen mit einer Hörminderung (auch: Schwerhörigkeit). In diesem Fall umfassen Hörgeräte meist wenigstens ein Mikrofon zur Erfassung von Umgebungsschall und einen diesem nachgeschalteten Signalprozessor (auch: Signalverarbeitungseinheit) zur üblicherweise frequenzspezifischen Verarbeitung (insbesondere Filterung und/oder Verstärkung oder Dämpfung) der von dem Mikrofon übertragenen Signale. Der Signalprozessor gibt die verarbeiteten Signale an den Lautsprecher zur Ausgabe an das Gehör weiter. Im Fall von Hörhilfegeräten kann der Lautsprecher in Abhängigkeit von der Hörminderung auch durch einen anderen Ausgangswandler, bspw. einen Knochenleitungshörer oder ein Cochlea-Implantat zur mechanischen bzw. elektrischen Stimulation des Gehörs ersetzt sein.

Hörgeräte, insbesondere Hörhilfegeräte werden üblicherweise in zwei Grundausführungen ausgebildet, nämlich als sogenannte Hinter-dem-Ohr- ("HdO") Hörgeräte oder als In-dem-Ohr- ("IdO") Hörgeräte. In der ersten Grundausführung sind das wenigstens eine Mikrofon - üblicherweise wenigstens zwei Mikrofone - und der Signalprozessor sowie normalerweise eine Energiequelle in einem hinter der Ohrmuschel zu tragenden Gehäuse angeordnet. Die Schallausgabe erfolgt über den Lautsprecher, der in einer üblichen Bauform in diesem Gehäuse angeordnet ist, via einen Schallschlauch zum Ohr. Alternativ ist der Lautsprecher aus diesem Gehäuse ausgelagert und wird im Gehörgang getragen. In der anderen Ausführung sind Mikrofon, Signalprozessor und Lautsprecher sowie eine Energiequelle in einem in dem Gehörgang zu tragenden Gehäuse angeordnet. Die Ausführung als IdO-Hörgerät hat dabei den Vorteil, dass der Klang dem natürlichen Klangeindruck des Ohrs am besten angenähert werden kann.

Üblicherweise wird bei einem IdO-Hörgerät eine auch als "shell" bezeichnete Außenschale, die üblicherweise den mit der Gehörgangwand in Kontakt stehende Gehäusewandung bildet, individuell an die spezifische Gehörgangform der Hörgerätenutzers angepasst. Bei einer solchen individuellen Außenschale spricht man auch von einer Otoplastik. Regelmäßig wird dabei ein Abdruck des Gehörgangs genommen und daraus eine Negativform für die zu fertigende Außenschale abgeleitet. Gemäß WO 02/067629 A2 wird hierzu ein auf den Gehörgang des Trägers abgestimmtes Hilfsmittel sowie ein Abbindematerial in den Gehörgang des Trägers eingeführt. Nachdem dieses Material ausgehärtet ist, wird ein Negativ angefertigt und nach der Bearbeitung dieses Negativs, falls erforderlich, und dem Einsetzen des Hörgerätes oder eines Hörgeräteersatzes darin wird die Stütze hergestellt. Aus US 5,455,994 A ist ein ähnliches Verfahren bekannt, bei dem zur Herstellung eines Im-Ohr-Hörgerätes ein Hilfselement, dessen Querschnitt größer ist als der eines Gehörgangs, in den Gehörgang eingeführt wird. Als Folge davon wird der Gehörgang erweitert. Anschließend wird ein hohles Entlüftungsrohr in den Gehörgang eingeführt, wonach der Gehörgang mit einem viskosen Material gefüllt wird. Nachdem das viskose Material erstarrt ist, wird die Form aus dem Gehörgang entfernt. Das Entlüftungsrohr sorgt dafür, dass Luft in einen Raum hinter der Form eingelassen wird. Die so gebildete Form hat einen Querschnitt, der größer ist als der Querschnitt des Gehörgangs. Anschließend wird ein Gehäuse für das Hörgerät hergestellt, wobei die Form als Schablone dient. Dadurch passt das Hörgerät eng in den Gehörgang, was den Tragekomfort verbessert. Das bei dieser Methode verwendete Hilfselement hat eine zylindrische Wand, die mit einer Vielzahl von Öffnungen versehen ist, um den Durchgang des viskosen Materials in die Räume zwischen dem Hilfselement und der Wand des Gehörgangs zu ermöglichen. Das Hilfselement umfasst ferner eine Hülse zur Führung des Entlüftungsschlauchs.

Aus WO 92/03894 A1 ist bekannt, ein Hörgerät durch In-situ-Formen eines bei Raumtemperatur härtenden Materials um Hörgerätekomponenten zu bilden. Das In-situ-Formen des kundenspezifischen Hörgeräts bietet eine akustische und bequeme Passform und minimiert die Verarbeitung mit mehreren Abdruck- und Gießverfahren. Aus US 5,131,411 A und US 5,333,622 A sind vergleichbare Verfahren bekannt, bei denen ein expandierendes Schaummaterial zur Abformung des Gehörgangs genutzt wird. Auch aus DE 4 233 651 A1 ist ein ähnliches Verfahren bekannt.

US 10,034,105 B beschreibt Artikel und zugehörige Vorrichtungen und Verfahren zur In-Situ-Montage, die eine flexible Hülse, eine an der flexiblen Hülse befestigte Gehäuseanordnung, eine in der flexiblen Hülse angeordnete Lichtquelle und ein in der flexiblen Hülse enthaltenes fotohärtbares Harz umfassen. Die flexible Hülle kann aus Elastomer bestehen. In der Gehäuseanordnung kann ein Wandler angeordnet werden. Vergleichbares ist auch aus US 10,284,975 B bekannt.

Bei einer Herstellung mittels sogenannter "rapid manufacturing" Methoden, bspw. einem 3D-Druckverfahren wird der Abdruck gescannt und daraus ein CAD-Modell erstellt. Dies ist grundsätzlich mit einem gewissen Aufwand verbunden. Auch ein HdO-Hörgerät kann eine Otoplastik aufweisen, mittels derer ein besonders guter Sitz des Schallausgangs des Schallschlauchs oder des im Gehörgang getragenen Lautsprechers erreicht werden soll. In US 9,936,314 B2 ist bspw. bekannt, eine Gehörgangabdichtung eines Hörgeräts zumindest teilweise aus einem formbaren, noch nicht ausgehärteten Material zu bilden, das beim Einsetzen in den Gehörgang an diesen angeformt und anschließend gehärtet werden kann.

Aus US 2016/0317352 A1 ist eine anpassbare Otoplastik zur Anpassung an das äußere Ohr und/oder den Gehörgang eines Benutzers beschrieben. Die Otoplastik weist einen Körper auf, der aus einem fotohärtbaren Polymer gebildet ist, und der zur Einführung in den äußeren Ohrkanal des Benutzers vorgesehen ist. Außerdem weist die Otoplastik eine Lichtquelle auf, die angrenzend an den Körper positioniert ist. Unter Anwendung von Lichtstrahlung der Lichtquelle kann der Körper so gehärtet werden, dass er passend an der Oberfläche des Ohrs bzw. des Gehörgangs des Benutzers anliegt.

Schließlich offenbart die DE 19834849 A1 ein Verfahren zur Herstellung einer Otoplastik unter Verwendung eines Hohlkörpers, einer dehnbaren Umfangswand und einer verformbaren Kunststoffmasse, die im Ohr unter inneren Überdruck gesetzt und durch Lichtapplikation verfestigt wird.

Der Erfindung liegt die Aufgabe zugrunde, eine vereinfachte Anpassung eines Hörgeräts an die Anatomie eines Hörgeräteträgers zu ermöglichen.

Diese Aufgabe wird erfindungsgemäß gelöst durch ein Verfahren mit den Merkmalen des Anspruchs 1. Weitere vorteilhafte und teils für sich erfinderische Ausführungsformen Weiterbildungen der Erfindung sind in den Unteransprüchen und der nachfolgenden Beschreibung näher dargelegt.

Das erfindungsgemäße Verfahren dient zur Anpassung einer Otoplastik eines Hörgeräts vorzugsweise an die Form zumindest eines Teils eines Gehörgangs eines Hörgerätenutzers.

Dazu wird verfahrensgemäß zunächst eine flexible, aus einem aushärtbaren und noch nicht ausgehärteten Material gebildete Außenschale bereitgestellt. Diese Außenschale bildet eine Außenwand der Otoplastik und definiert einen Gehäuseinnenraum des Hörgeräts, zumindest aber der Otoplastik. Der Gehäuseinnenraum wird sowohl an seinem im bestimmungsgemäßen Tragezustand im Gehörgang des Hörgeräteträgers dem Trommelfell zugewandten Ende als auch am entgegengesetzten Ende (auch als gehörgangausgangsseitiges Ende bezeichnet) abgedichtet. Außerdem wird der Gehäuseinnenraum über eine Druckeingangsöffnung mit einem Druck- und Härtungs-Vermittler verbunden. Die Außenschale wird in den Gehörgang des Hörgeräteträgers eingeführt sowie vorzugsweise in eine bestimmungsgemäße Trageposition ausgerichtet. Anschließend wird über den Druck- und Härtungs-Vermittler der Gehäuseinnenraum mit einem insbesondere gegenüber dem Umgebungsdruck erhöhten Innendruckwert beaufschlagt, sodass sich die Außenschale an die Gehörgangwand anlegt. Daraufhin wird unter Aufrechterhaltung des Innendruckwerts über den Druck- und Härtungs-Vermittler die Aushärtung des aushärtbaren Materials eingeleitet. Zudem wird mittels einer Einlage ein Entlüftungskanal zwischen dem trommelfellseitigen Ende und dem gehörgangausgangsseitigen Ende der Außenschale in diese eingeformt.

Die Außenschale des Hörgeräts wird mithin "in situ" an die individuelle Form des Gehörgangs des Hörgeräteträgers angepasst. Eine Vermessung des Gehörgangs - beispielsweise durch Fertigung eines Abdrucks oder optische Methoden - sowie eine nachträgliche, separate Fertigung der Außenschale anhand der Vermessung sowie der damit verbundene Aufwand kann mithin entfallen. Insbesondere ist es möglich, die Otoplastik - also die vorstehend beschriebene Außenschale - des Hörgeräts unmittelbar (quasi ohne Zeitversatz, der für die separate Fertigung der Außenschale anfällt) an den Gehörgang des Hörgeräteträgers anzupassen.

Grundsätzlich kann die Aushärtung dabei mittels erhöhter Temperatur, die bspw. über ein in den Druck- und Härtungs-Vermittler integriertes Heizelement aufgebracht wird oder durch Injektion eines Reaktionspartners, bspw. eines Beschleunigers, Härters oder dergleichen (optional auch gasförmig) in das noch nicht ausgehärtete Material eingeleitet.

Bevorzugt wird aber - unter Aufrechterhaltung des Innendruckwerts - die Außenschale über den Druck- und Härtungs-Vermittler mit einer Strahlung beaufschlagt und dadurch die Aushärtung des aushärtbaren Materials eingeleitet. In diesem Fall bildet Druck- und Härtungs-Vermittler also vorzugsweise einen Druck- und Strahlungs-Vermittler.

In einer zweckmäßigen Verfahrensvariante wird zur Abdichtung des Gehäuseinnenraums gehörgangausgangsseitig eine Abschlussplatte - für den Fall, dass der Gehäuseinnenraum vorzugsweise zur Aufnahme von elektrischen Bauelementen dient, insbesondere in Form einer Faceplate - sowie trommelfellseitig ein Lautsprecher auf oder in korrespondierende Öffnungen der Außenschale montiert. D. h. auf die Außenschale wird die Abschlussplatte bzw. Faceplate, die insbesondere bei einem In-dem-Ohr-Hörgerät (kurz: "IdO-Hörgerät") den Gehäuseinnenraum in Richtung Ohraußenseite in bekannter Weise abschließt, aufgesetzt. Vorzugsweise weist die Außenschale trommelfellseitig - d. h. an ihrem im bestimmungsgemäßen Tragezustand dem Trommelfell zugewandten Ende - eine Schallaustrittsöffnung auf, in die der Lautsprecher zumindest mit einem Schallausgangsstutzen derart eingesetzt wird, dass diese Schallaustrittsöffnung verschlossen und vorzugsweise gasdicht abgedichtet ist. Die gasdichte Abdichtung des Gehäuseinnenraums, insbesondere der trommelfellseitigen Schallaustrittsöffnung dient im bestimmungsgemäßen Betrieb des Hörgeräts auch der Vermeidung von luftschallbasierten Rückkopplungen. Für die hier und im Folgenden beschriebene Anpassung des Hörgeräts ermöglicht die Abdichtung vorteilhafterweise die Beaufschlagung des Gehäuseinnenraums mit dem erhöhten Innendruckwert, sodass die Außenschale im Rahmen ihrer Flexibilität zum Anlegen an den Gehörgang "aufgeblasen" werden kann. Dieses Vorgehen eignet sich vorteilhafterweise sowohl für ein IdO-Hörgerät als auch für die Otoplastik eines Hinter-dem-Ohr-Hörgeräts (kurz: "HdO-Hörgerät"), das einen im Gehörgang zu tragenden Lautsprecher aufweist. Für ein "klassisches" HdO-Hörgerät wird die Schallaustrittsöffnung dagegen vorzugsweise mittels eines "Blindstopfens" verschlossen, der nach der Anpassung wieder entfernt wird.

Die vorstehend beschriebene Abschlussplatte (insbesondere die Faceplate) weist dabei zweckmäßigerweise die Druckeingangsöffnung auf, in die der Druck- und Härtungsvermittler eingesetzt wird.

In einer bevorzugten Weiterbildung der vorstehend beschriebenen Verfahrensvariante wird der Lautsprecher vorzugsweise mittels eines Halters (insbesondere eines Halteelements) in einer bestimmungsgemäßen Ausrichtung gegenüber der Abschlussplatte bzw. Faceplate positioniert. Insbesondere wird der Lautsprecher dabei in Abhängigkeit von der individuellen Gehörgangform gegenüber der Abschlussplatte bzw. Faceplate ausgerichtet. Der Halter dient dabei auch als Abstandhalter zwischen dem Lautsprecher und der Abschlussplatte bzw. Faceplate, sodass zweckmäßigerweise unter Wirkung des erhöhten Innendruckwerts die Außenschale sich nicht in Richtung der Längsachse des Gehörgangs - d. h. in Richtung des Abstands zwischen der Abschlussplatte bzw. Faceplate und dem Lautsprecher - ausdehnen kann. Bei dem vorstehend beschriebenen Halter handelt es sich vorzugsweise um einen (bspw. metallischen) Drahtstift, der zur Ausrichtung des Lautsprechers gegenüber der Abschlussplatte bzw. Faceplate entsprechend gebogen werden kann, oder um einen insbesondere aus einem Kunststoff gebildeten Abstandhalter oder dergleichen.

In einer weiteren zweckmäßigen Weiterbildung einer der beiden vorstehend beschriebenen Verfahrensvarianten wird der Druck- und Härtungs-Vermittler in eine die Druckeingangsöffnung bildende Batterieöffnung der Faceplate gasdicht eingesetzt. Insbesondere wird dazu zunächst eine die Batterieöffnung reversibel verschließende Batteriefachtür von der Faceplate abgenommen ("demontiert"). Somit kann vorteilhafterweise eine ohnehin regelmäßig vorhandene Öffnung in der Faceplate genutzt werden, um den Gehäuseinnenraum mit dem erhöhten Innendruckwert beaufschlagen sowie anschließend die Strahlung innenseitig auf die Außenschale aufbringen zu können. Eine zusätzliche Öffnung, die anschließend wieder verschlossen werden müsste, kann somit vorteilhafterweise entfallen.

In einer weiteren zweckmäßigen Verfahrensvariante wird über den Druck- und Strahlungs-Vermittler als Strahlung insbesondere UV-Licht ausgesendet. Vorzugsweise weist der Druck- und Strahlungs-Vermittler dazu an seinem mit dem Gehäuseinnenraum in Verbindung stehenden Ende - vorzugsweise mit dem Ende, mittels dessen er in die Batterieöffnung eingesetzt ist - eine UV-Lampe oder eine UV-Diode auf. Alternativ endet an diesem Ende ein zum Transport von UV-Licht eingerichteter Lichtwellenleiter. Dieser weist optional ein kugelförmiges Spitzenende auf, das eine möglichst gleichförmige Lichtverteilung im Gehäuseinnenraum ermöglicht.

Mittels einer Einlage wird ein Entlüftungskanal zwischen dem trommelfellseitigen Ende und dem gehörgangausgangsseitigen Ende der Außenschale in letztere eingeformt. Der Entlüftungskanal zieht sich dabei vorzugsweise über die gesamte Länge durch die Außenschale, sodass eine Entlüftung des im bestimmungsgemäßen Tragezustand des Hörgeräts zwischen dem Trommelfell und dem Hörgerät verbleibenden Gehörgang-Restraums ermöglicht wird. Bei der Einlage handelt es sich in einfacher Ausführung um eine Art Schnur, die einen schlitz- oder grabenartigen Kanal (der mithin zur Außenseite des Hörgeräts offenliegt) in die Außenschale einformt, indem diese unter Wirkung des erhöhten Innendruckwerts um die Einlage herum ausgedrückt wird. Alternativ handelt es sich bei der Einlage um einen Schlauch oder ein Röhrchen, sodass auch während der Anpassung der Außenschale ein Druckausgleich im Gehörgang-Restraum stattfinden kann. Weiter alternativ ist die Einlage in Form eines Schlauchs in die Außenschale eingebettet, wobei lediglich die beiden Enden des Schlauchs am gehörgangausgangsseitigen Ende bzw. am trommelfellseitigen Ende der Außenschale offen liegen.

Ein Hörgerät weist wenigstens die vorstehend beschriebene Außenschale, d. h. die aus dem (vorzugsweise strahlungsinduziert) aushärtbaren, in einem bestimmungsgemäßen Zwischenfertigungsschritt (insbesondere in einem bestimmungsgemäßen Auslieferungszustand) noch nicht ausgehärteten Material gebildete Außenschale auf. Die Außenschale bildet dabei wie beschrieben die Außenwand der Otoplastik.

Vorzugsweise handelt es sich bei dem Hörgerät um ein IdO-Hörgerät, bei dem die Otoplastik das Außengehäuse selbst bildet. Alternativ handelt es sich bei dem Hörgerät um ein HdO-Hörgerät, dessen Otoplastik zur Positionierung eines Schallausgangs eines Schallschlauchs oder des Lautsprechers im Gehörgang dient. Konkret handelt es sich bei dem Hörgerät um das Hörgerät, dessen Otoplastik mittels des vorstehend beschriebenen Verfahrens angepasst wird. Somit teilen das vorstehend beschriebene Verfahren sowie das hier und im Folgenden beschriebene Hörgerät (bzw. auch die Otoplastik) die jeweiligen Vorteile und Merkmale in entsprechender Art und Weise.

Bevorzugt sind - insbesondere im Fall des IdO-Hörgeräts - die Abschlussplatte, insbesondere die Faceplate und der Lautsprecher wie vorstehend beschrieben bereits vormontiert. Bevorzugt sind alle für den späteren, bestimmungsgemäßen Betrieb des IdO-Hörgeräts erforderlichen Bauelemente bereits entsprechend montiert. Mit anderen Worten ist das Hörgerät auch grundsätzlich mit nicht ausgehärteter Außenschale bereits einsatzfähig. Wie vorstehend beschrieben wird zum Anpassen der Otoplastik des Hörgeräts in diesem Fall vorzugsweise lediglich die Batteriefachtür von der Faceplate abgenommen und der Druck- und Härtungs-Vermittler in die Batterieöffnung eingesetzt.

In einer zweckmäßigen Ausführung weist die Außenschale eine Außenmembran sowie eine Innenmembran auf, die beide vorzugsweise aus einem gummielastischen Material gebildet sind. Das aushärtbare Material ist dabei in einen zwischen der Außenmembran und Innenmembran angeordneten Spaltraum eingebracht. Dies ist insbesondere für den Fall zweckmäßig, dass das aushärtbare Material im noch nicht ausgehärteten Zustand flüssig und/oder zumindest in einem vergleichsweise klebrigen Zustand vorliegt. Die Außen- und die Innenmembranen bilden dabei mithin Trennschichten, die verhindern, dass das aushärtbare Material an der Gehörgangwand und/oder an den elektrischen Bauelementen des Hörgeräts ankleben kann.

In einer bevorzugten Weiterbildung sind die Außen- und die Innenmembranen vorzugsweise durch Abstandhalter, die eine Dicke des zwischen diesen angeordneten Spaltraums vorgeben voneinander beabstandet. Dadurch kann vorteilhafterweise verhindert werden, dass bei Druckbeaufschlagung des Gehäuseinnenraums durch Verdrängung des insbesondere fließfähigen aushärtbaren Materials eine Ausdünnung der Wandstärke der Außenschale erfolgt. Beispielsweise sind diese Abstandhalter in Form von Rippen, Domen oder dergleichen auf der Innenseite der Außenmembran und/oder der Außenseite der Innenmembran angeordnet. Beispielsweise wird die Innenmembran in die Außenmembran eingeschoben und dabei mittels der Abstandhalter zu dieser beabstandet. Anschließend wird der mittels der Abstandhalter vorgegebene Spaltraum mit dem aushärtbaren Material ausgegossen. Optional wird der Spaltraum durch eine Verbindung (bspw. Kleben, Schweißen oder dergleichen) der losen Enden der Innen- und der Außenmembran verschlossen.

In einer alternativen Ausführung liegt das aushärtbare Material in dem bestimmungsgemäßen Zwischenfertigungsschritt in einem gelartigen Zustand vor, in dem das Material vorzugsweise keine Oberflächenklebrigkeit und einen hinreichenden räumlichen Zusammenhalt aufweist. Beispielsweise handelt es sich bei diesem gelartigen Zustand um einen teilvernetzten Zustand, in dem das Material noch eine hinreichend hohe Elastizität und/oder Plastizität aufweist. In diesem Fall ist die Außenschale insbesondere unter Wegfall insbesondere der vorstehend beschriebenen außen- und innenseitigen Trennmembran durch das gelartige aushärtbare Material gebildet.

Vorzugsweise handelt es sich bei dem aushärtbaren Material um ein UV-härtbares Epoxidharz, ein UV-härtbares Silikonharz oder dergleichen.

Ein Hörgerätesystem umfasst das vorstehend beschriebene Hörgerät sowie den vorstehend beschriebenen Druck- und Härtungs-Vermittler, der zum Anschluss an die Druckeingangsöffnung des Hörgeräts eingerichtet und vorgesehen ist.

Vorzugsweise handelt es sich bei diesem Druck- und Härtungs-Vermittler um eine Art Stift mit einer zu der Druckeingangsöffnung komplementären Spitze, durch die ein Druckkanal geführt ist. An dieser Spitze sitzt in einer Variante die vorstehend beschriebene UV-Lampe oder -Diode oder das vorstehend beschriebene (Spitzen-)Ende des Lichtwellenleiters.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher dargestellt. Darin zeigen:
- Fig. 1: in einer schematischen Perspektivansicht ein Hörgerät,
- Fig. 2: in einer schematischen Teilschnittansicht II-II gemäß Fig. 1 ein Hörgerätesystem mit dem dortigen Hörgerät, und
- Fig. 3: in einem schematischen Ablaufdiagramm ein Verfahren zur Anpassung des Hörgeräts.

Einander entsprechende Teile sind in allen Figuren stets mit gleichen Bezugszeichen versehen.

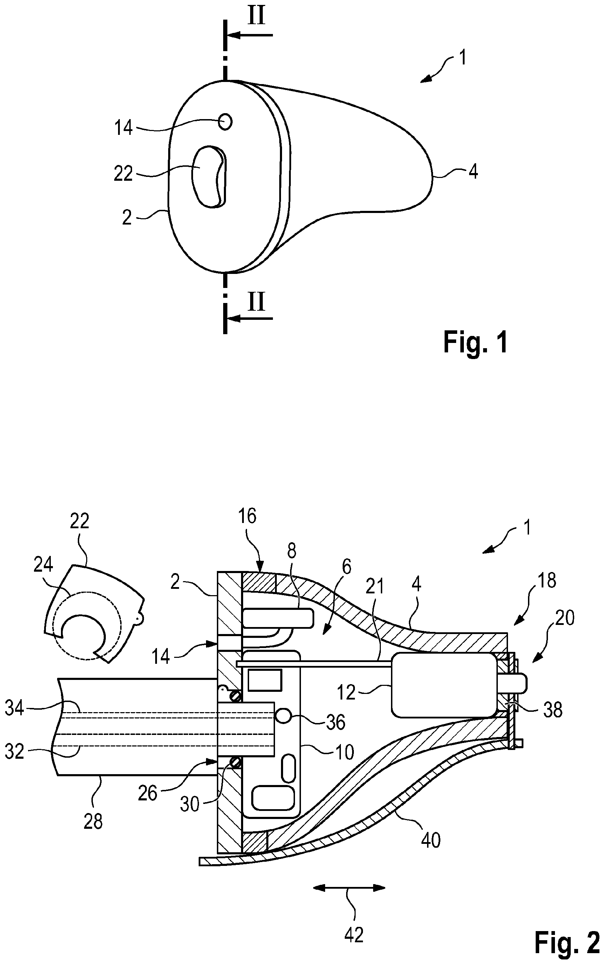

In Fig. 1 ist ein Hörgerät, konkret in der Bauform eines IdO-Hörgeräts, kurz als "IdO 1" bezeichnet schematisch dargestellt. Dieses IdO 1 weist eine Faceplate 2 und eine damit verbundene Außenschale 4 auf. Die Faceplate 2 und die Außenschale 4 definieren einen Gehäuseinnenraum 6 (s. Fig. 2), der zur Aufnahme von elektronischen Komponenten des IdO 1 dient. Als elektronische Komponenten sind in dem Gehäuseinnenraum 6 ein Mikrofon 8, ein Signalprozessor 10 und ein Lautsprecher 12 angeordnet. Das Mikrofon 8 ist fluidisch mit einer Mikrofonöffnung 14 in der Faceplate 2 gekoppelt. Der Signalprozessor 10 ist genauso wie das Mikrofon 8 an der Faceplate 2 gehaltert.

Da das IdO 1 in einem bestimmungsgemäßen Tragezustand in einem Gehörgang eines Hörgerätenutzers oder Hörgeräteträgers getragen wird, wird die Außenschale 4 in einem nachfolgend näher beschriebenen Verfahren an die Form des Gehörgangs angepasst und bildet dadurch eine Außenwand einer das Gehäuse des IdO 1 bildenden Otoplastik. In einem Zwischenfertigungszustand oder Auslieferungszustand ist die Außenschale 4 noch nicht an den Gehörgang angepasst (s. Fig. 2). Die Außenschale 4 umfasst zur Anpassung mittels UV-Licht aushärtbares Material. Dieses ist in nicht näher dargestellter Weise zwischen einer Außenmembran und einer Innenmembran, die jeweils die Wandstärke der Außenschale 4 zur Außenseite bzw. zum Gehäuseinnenraum 6 begrenzen, eingebracht. Die Faceplate 2 schließt dabei den Gehäuseinnenraum 6 - in Bezug auf den bestimmungsgemäßen Tragezustand im Gehörgang gesehen - gehörgangausgangsseitig ab. Dazu ist die Faceplate 2 mit einem starren Abschnitt 16 der Außenschale 4 mediendicht verbunden. Ein trommelfellseitiges Ende 18, konkret eine dort angeordnete Schallaustrittsöffnung 20 der Außenschale 4 ist mittels des Lautsprechers 12 verschlossen. Der Lautsprecher 12 ist dabei gegenüber der Faceplate 2 mittels eines Halters in Form eines Drahtstifts 21 positioniert und gehalten.

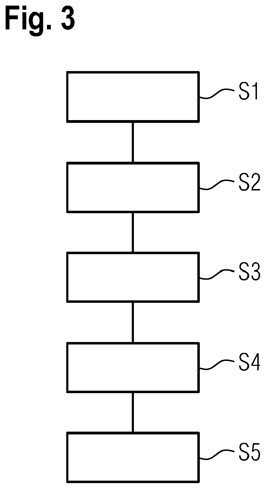

Zur Anpassung des IdO 1 wird in einem ersten Verfahrensschritt S1 (s. Fig. 3) das vorstehend beschriebene IdO 1 in seinem Auslieferungszustand, d. h. mit noch nicht ausgehärteter Außenschale 4 bereitgestellt. In einem zweiten Verfahrensschritt S2 wird eine Batteriefachtür 22, die zur Halterung und Positionierung einer in Fig. 2 nur angedeuteten Batterie 24 im Gehäuseinnenraum 6 sowie zum Verschließen einer korrespondierenden Batterieöffnung 26 dient, von der Faceplate 2 entfernt. In die Batterieöffnung 26 wird anschließend ein Stift 28 eingesetzt und mittels eines Dichtelements 30 umlaufend gegen die Batterieöffnung 26 abgedichtet. In dem Stift 28 verläuft ein Druck- oder Luftkanal 32 sowie ein Lichtwellenleiter 34. Der Druck- oder Luftkanal 32 endet spitzenseitig offenstehend im eingesetzten Zustand mithin in dem Gehäuseinnenraum 6. Der Lichtwellenleiter 34 endet spitzenseitig in einem kugelartigen Spitzenende 36, das dazu eingerichtet und vorgesehen ist, mittels des Lichtwellenleiters 34 transportierte UV-Strahlung homogen in den Gehäuseinnenraum 6 abzustrahlen. Der Stift 28 dient mithin als ein Druck-und Härtungs-, konkret Strahlungs-Vermittler.

In einem dritten Verfahrensschritt S3 wird das IdO 1 mittels des Stifts 28 in den Gehörgang des Hörgeräteträgers eingesetzt und in seine bestimmungsgemäße Position im Gehörgang gebracht. In einem weiteren Verfahrensschritt S4 wird über den Druck- oder Luftkanal 32 Luft in den Gehäuseinnenraum 6 gepumpt, der Gehäuseinnenraum 6 mithin mit einem erhöhten Innendruckwert beaufschlagt. Dadurch wird das aushärtbare und noch nicht ausgehärtete Material der Außenschale 4 näherungsweise radial zur Außenseite gedehnt. Der Drahtstift 21 verhindert dabei eine Längung der Außenschale 4 in Richtung des Trommelfells. Die Außenschale 4 wird mithin vergleichbar zu einem Luftballon aufgeblasen. Dadurch legt sich die Außenschale 4 an den Gehörgang an.

Um im bestimmungsgemäßen Einsatzzustand oder Betriebszustand des IdO 1 eine Entlüftung des zwischen dem trommelfellseitigen Ende 18 und dem Trommelfell verbleibenden Gehörgang-Restraum zu ermöglichen, ist an dem trommelfellseitigen Ende 18 konkret an einem Haltering 38 für den Lautsprecher 12 eine schnur- oder schlauchförmige Einlage 40 befestigt, die sich in Längsrichtung 42 entlang der Außenschale 4 erstreckt. Unter Wirkung des erhöhten Innendruckwerts umfließt die Außenschale 4 diese Einlage 40 teilweise, sodass ein Entlüftungskanal in der Außenseite der Außenschale 4 gebildet wird. Der starre Abschnitt 16 sowie die Faceplate 2 weisen in nicht näher dargestellter Form eine Aussparung oder dergleichen auf, durch die die Durchführung der Einlage 40 zwischen der Gehörgangwand und dem starren Abschnitt 16 bzw. der Faceplate 2 an letzteren vorbei ermöglicht. Die Faceplate 2 ist in Abweichung zur Darstellung kleiner als der Gehörgangdurchmesser und der Außendurchmesser der Außenschale 4.

In einem weiteren Verfahrensschritt S5 wird unter Aufrechterhaltung des Innendruckwerts mittels des Lichtwellenleiters 34 UV-Licht in den Gehäuseinnenraum 6 abgestrahlt. Unter Wirkung des UV-Licht wird die Aushärtung des aushärtbaren Materials der Außenschale 4 eingeleitet, sodass dieses vernetzt und die Außenschale 4 in ihrer an den Gehörgang angepassten Form fixiert. Anschließend wird das IdO 1 aus dem Gehörgang entnommen, die Einlage 40 entfernt, der Stift 28 aus der Batterieöffnung 26 entnommen und die Batteriefachtür 22 wieder eingesetzt. Daraufhin ist das IdO 1 zum individuellen Einsatz angepasst.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden. Der Schutzumfang wird durch die nachfolgenden Patentansprüche definiert.

### Bezugszeichenliste

- 1: IdO
- 2: Faceplate
- 4: Außenschale
- 6: Gehäuseinnenraum
- 8: Mikrofon
- 10: Signalprozessor
- 12: Lautsprecher
- 14: Mikrofonöffnung
- 16: starrer Abschnitt
- 18: Ende
- 20: Schallaustrittsöffnung
- 21: Drahtstift
- 22: Batteriefachtür
- 24: Batterie
- 26: Batterieöffnung
- 28: Stift
- 30: Dichtelement
- 32: Druck- oder Luftkanal
- 34: Lichtwellenleiter
- 36: Spitzenende
- 38: Haltering
- 40: Einlage
- 42: Längsrichtung

- S1: Verfahrensschritt
- S2: Verfahrensschritt
- S3: Verfahrensschritt
- S4: Verfahrensschritt
- S5: Verfahrensschritt

## Patentansprüche

1. Verfahren zur Anpassung einer Otoplastik eines Hörgeräts (1),
wobei verfahrensgemäß
- eine flexible, aus einem aushärtbaren und noch nicht ausgehärteten Material gebildete Außenschale (4), die eine Außenwand der Otoplastik bildet und einen Gehäuseinnenraum (6) definiert, bereitgestellt wird,
- der Gehäuseinnenraum (6) sowohl an seinem im bestimmungsgemäßen Tragezustand in einem Gehörgang eines Hörgeräteträgers dem Trommelfell zugewandten Ende (18) als auch am entgegengesetzten Ende abgedichtet wird,
- der Gehäuseinnenraum (6) über eine Druckeingangsöffnung (26) mit einem Druck- und Härtungs-Vermittler (28) verbunden wird,
- die Außenschale (4) in den Gehörgang des Hörgeräteträgers eingeführt wird,
- über den Druck- und Härtungs-Vermittler (28) der Gehäuseinnenraum (6) mit einem erhöhten Innendruckwert beaufschlagt wird, so dass sich die Außenschale (4) an die Gehörgangwand anlegt, und
- unter Aufrechterhaltung des Innendruckwerts über den Druck- und Härtungs-Vermittler (28) die Aushärtung des aushärtbaren Materials eingeleitet wird,
**dadurch gekennzeichnet, dass** mittels einer Einlage (40) ein Entlüftungskanal zwischen dem trommelfellseitigen Ende (18) und dem gehörgangausgangsseitigen Ende der Außenschale (4) in diese eingeformt wird.

2. Verfahren nach Anspruch 1,
wobei die Außenschale (4) über den Druck- und Härtungs-Vermittler (28) mit einer Strahlung beaufschlagt und dadurch die Aushärtung des aushärtbaren Materials eingeleitet wird, insbesondere wobei über den Druck- und Härtungs-Vermittler (28) als Strahlung UV-Licht ausgesendet wird.

3. Verfahren nach Anspruch 1 oder 2,
wobei der Gehäuseinnenraum (6) insbesondere zur Aufnahme von elektrischen Bauelementen eingerichtet ist, und wobei zur Abdichtung des Gehäuseinnenraums (6) gehörgangausgangsseitig eine Abschlussplatte, insbesondere Faceplate (2), sowie trommelfellseitig ein Lautsprecher (12) auf oder in korrespondiere Öffnungen der Außenschale (4) montiert werden.

4. Verfahren nach Anspruch 3,
wobei der Lautsprecher (12) mittels eines Halters (21) in einer bestimmungsgemäßen Ausrichtung gegenüber der Abschlussplatte (2) positioniert wird.

5. Verfahren nach Anspruch 3 oder 4,
wobei der Druck- und Härtungs-Vermittler (28) in eine die Druckeingangsöffnung bildende Batterieöffnung (26) der Abschlussplatte (2), insbesondere unter temporären Wegfall einer Batteriefachtür (22) zum Verschließen der Batterieöffnung (26) gasdicht eingesetzt wird.

## Claims

1. Method for adapting an otoplastic of a hearing aid (1),
wherein according to the method
- a flexible outer shell (4) formed from a curable and not yet cured material, which forms an outer wall of the otoplastic and defines a housing interior (6), is provided,
- the housing interior (6) is sealed both at its end (18) facing toward the eardrum in the intended worn state in an auditory canal of a hearing aid wearer and also at the opposite end,
- the housing interior (6) is connected via a pressure inlet opening (26) to a pressure and curing facilitator (28),
- the outer shell (4) is inserted into the auditory canal of the hearing aid wearer,
- an elevated internal pressure value is applied to the housing interior (6) via the pressure and curing facilitator (28), so that the outer shell (4) presses against the auditory canal wall, and
- the curing of the curable material is initiated via the pressure and curing facilitator (28) while maintaining the internal pressure value,
**characterized in that** a ventilation channel between the eardrum side end (18) and the auditory canal outlet side end of the outer shell (4) is moulded into the latter by means of an insert (40).

2. Method according to Claim 1,
wherein radiation is applied to the outer shell (4) via the pressure and curing facilitator (28) and the curing of the curable material is thus initiated, in particular wherein UV light is emitted as radiation via the pressure and curing facilitator (28) .

3. Method according to Claim 1 or 2,
wherein the housing interior (6) is configured in particular for accommodating electrical components, and wherein to seal the housing interior (6), a terminus plate, in particular a faceplate (2), is installed on the auditory canal outlet side, and a loudspeaker (12) is installed on the eardrum side, on or in corresponding openings of the outer shell (4) .

4. Method according to Claim 3,
wherein the loudspeaker (12) is positioned by means of a holder (21) in an intended alignment in relation to the terminus plate (2).

5. Method according to Claim 3 or 4,
wherein the pressure and curing facilitator (28) is inserted in a gas-tight manner into a battery opening (26) of the terminus plate (2) forming the pressure inlet opening, in particular while temporarily omitting a battery compartment door (22) for closing the battery opening (26).

## Revendications

1. Procédé d'adaptation d'un embout auriculaire d'un appareil auditif (1), dans lequel, conformément au procédé,
- une coque extérieure (4) flexible, formée d'un matériau durcissable et encore non durci, qui forme une paroi extérieure de l'embout auriculaire et définit un espace intérieur de boîtier (6), est fournie,
- l'espace intérieur de boîtier (6) est étanchéifié aussi bien à son extrémité (18) tournée vers le tympan à l'état de port conforme dans un conduit auditif d'un porteur d'appareil auditif qu'à l'extrémité opposée,
- l'espace intérieur de boîtier (6) est relié à un médiateur de pression et de durcissement (28) par l'intermédiaire d'une ouverture d'entrée de pression (26),
- la coque extérieure (4) est insérée dans le conduit auditif du porteur d'appareil auditif,
- l'espace intérieur de boîtier (6) est sollicité avec une valeur de pression intérieure élevée par l'intermédiaire du médiateur de pression et de durcissement (28), de telle sorte que la coque extérieure (4) s'applique contre la paroi du conduit auditif, et
- le durcissement du matériau durcissable est déclenché en maintenant la valeur de pression intérieure par l'intermédiaire du médiateur de pression et de durcissement (28),
**caractérisé en ce qu'**un canal d'aération est formé dans la coque extérieure (4) au moyen d'un insert (40) entre l'extrémité (18) côté tympan et l'extrémité côté sortie du conduit auditif de celle-ci.

2. Procédé selon la revendication 1,
dans lequel la coque extérieure (4) est sollicitée avec un rayonnement par l'intermédiaire du médiateur de pression et de durcissement (28) et le durcissement du matériau durcissable est ainsi déclenché, notamment dans lequel de la lumière UV est émise en tant que rayonnement par l'intermédiaire du médiateur de pression et de durcissement (28).

3. Procédé selon la revendication 1 ou 2,
dans lequel l'espace intérieur de boîtier (6) est conçu notamment pour recevoir des composants électriques et, dans lequel, pour étanchéifier l'espace intérieur de boîtier (6), une plaque de fermeture, notamment une plaque frontale (2), est montée côté sortie du conduit auditif, et un haut-parleur (12) est monté côté tympan sur ou dans des ouvertures correspondantes de la coque extérieure (4).

4. Procédé selon la revendication 3,
dans lequel le haut-parleur (12) est positionné au moyen d'un support (21) dans une orientation conforme par rapport à la plaque de fermeture (2).

5. Procédé selon la revendication 3 ou 4,
dans lequel le médiateur de pression et de durcissement (28) est introduit de manière étanche au gaz dans une ouverture de batterie (26) de la plaque de fermeture (2) formant l'ouverture d'entrée de pression, notamment en supprimant temporairement une porte de compartiment de batterie (22) pour fermer l'ouverture de batterie (26).
